# EUROPÄISCHE PATENTSCHRIFT

(11) **EP 1 514 433 B1**
(45) Veröffentlichungstag und Bekanntmachung des Hinweises auf die Patenterteilung: **17.11.2010**
(21) Anmeldenummer: 03759846.3
(22) Anmeldetag: 12.06.2003
(51) Int. Cl.: H04Q 3/00, H04M 7/00, H04L 29/06, H04M 3/58

(54) **VERFAHREN ZUR VERBINDUNGSSTEUERUNG IN EINEM PAKETORIENTIERTEN KOMMUNIKATIONSNETZ SOWIE ANORDNUNGEN ZU SEINER DURCHFÜHRUNG**
METHOD FOR CONTROLLING A CONNECTION IN A PACKET-ORIENTED COMMUNICATION NETWORK AND ARRANGEMENTS FOR CARRYING OUT SAID METHOD
PROCEDE DE COMMANDE DE LIAISON DANS UN RESEAU DE COMMUNICATION PAR PAQUETS ET SYSTEMES POUR METTRE EN OEUVRE CE PROCEDE

(30) Priorität: 17.06.2002 DE 10226901
(43) Veröffentlichungstag der Anmeldung: 16.03.2005
(73) Patentinhaber: SIEMENS AKTIENGESELLSCHAFT, 80333 München (DE)
(72) Erfinder: HORVATH, Ernst, A-1060 Wien (AT); KLAGHOFER, Karl, 81373 München (DE)
(74) Vertreter: Fritzsche, Thomas
(86) Internationale Anmeldenummer: PCT/DE2003/001951
(87) Internationale Veröffentlichungsnummer: WO 2003/107690

(56) Entgegenhaltungen:
- EP-A- 1 001 596
- EP-A- 1 014 665
- WO-A-00/76107
- US-A1- 2001 056 496
- "Packet-based multimedia communications systems" ITU-T RECOMMENDATION H.323, September 1999 (1999-09), Seiten 1-129, XP002166480 in der Anmeldung erwähnt
- "Call transfer supplementary service for H.323" ITU-T RECOMMENDATION H.450-2, Februar 1998 (1998-02), Seiten 1-51, XP002152631

## Beschreibung

In zeitgemäßen Kommunikationssystemen werden Kommunikationsverbindungen, insbesondere Echtzeitverbindungen, z.B. zur Sprach-, Video- oder Multimedia-Kommunikation, in zunehmendem Maße auch über paketorientierte Kommunikationsnetze, wie z.B. lokale Netze (Local Area Networks) oder Weitverkehrsnetze (Wide Area Networks) geführt. Auf dieser Technik basiert beispielsweise die sog. Internet-Telefonie, die häufig auch als VoIP-Telefonie (VoIP: Voice/Video over Internet Protocol) bezeichnet wird.

Moderne paketorientierte Echtzeit-Kommunikationssysteme basieren häufig auf einer Systemarchitektur gemäß der ITU-T-Empfehlung H.323. In derartigen Kommunikationsnetzen ist üblicherweise ein sog. Gatekeeper zur Signalisierungssteuerung vorgesehen. Während eine Verbindungssignalisierung zwischen Verbindungsendpunkten über den Gatekeeper geführt wird, werden die im Rahmen der Verbindung zu übertragenden Nutzdaten direkt über zwischen den Verbindungsendpunkten aufgebaute Nutzdatenkanäle übermittelt. Kommunikationssysteme gemäß der H.323-Empfehlung stellen eine Vielzahl aus der herkömmlichen, leitungsvermittelten Kommunikationstechnik bekannte Leistungsmerkmale, wie z.B. Rufweiterschaltung, Anrufumleitung oder Anklopfen bereit. Zur Unterstützung oder Realisierung derartiger Leistungsmerkmale wird in H.323-Kommunikationsnetzen häufig eine sog. "Pause-and-Rerouting-Prozedur" eingesetzt. Bei der Pause-and-Rerouting-Prozedur veranlasst der Gatekeeper einen jeweiligen Verbindungsendpunkt dazu, ein Senden von Nutzdaten vorübergehend einzustellen und die betreffenden Nutzdatenkanäle zu schließen. Nach einer erfolgreichen Schließung der Nutzdatenkanäle kann der Gatekeeper ein Öffnen neuer Nutzdatenkanäle mit geänderten Eigenschaften oder zwischen anderen Verbindungsendpunkten veranlassen. Auf diese Weise kann eine einfache verbindungssteuerung realisiert werden. Die Pause-and-Rerouting-Prozedur ist beispielsweise in Kapitel 8.4.6 der H.323-Empfehlung beschrieben.

Um vor dem Öffnen neuer Nutzdatenkanäle festzustellen, ob die zu schließenden Nutzdatenkanäle erfolgreich geschlossen wurden, sind gemäß dem bisherigen Stand der Technik vom Gatekeeper alle Nutzdatenkanäle aller bestehenden Verbindungen zentral zu verwalten. Dies betrifft insbesondere auch Verbindungen bei denen eine Pause-and-Rerouting-Prozedur nicht ausgeführt wird. Eine derartige Kanalverwaltung bedingt jedoch einerseits einen hohen Implementierungsaufwand, sowohl hinsichtlich Verarbeitungsleistung als auch Speicherbedarf, und andererseits eine erhöhte Fehleranfälligkeit aufgrund einer zusätzlich erforderlichen Datenhaltung und damit verbundener Synchronisationserfordernisse. Beide Aspekte wirken sich negativ auf die Skalierbarkeit eines Kommunikationssystems aus.

Aus WO 00/76107 ist schon ein Verfahren zum Steuern einer Verbindung in einem paketorientierten Kommunikations netz bekannt.

Es ist Aufgabe der vorliegenden Erfindung, ein Verfahren zur Verbindungssteuerung in einem paketorientierten Kommunikationsnetz anzugeben, das eine gegenüber dem Stand der Technik einfachere Ablaufsteuerung aufweist. Es ist weiterhin Aufgabe der Erfindung eine Signalisierungssteuerung sowie ein paketorientiertes Kommunikationsnetz zur Durchführung des Verfahrens anzugeben.

Gelöst wird diese Aufgabe durch ein Verfahren mit den Merkmalen des Patentanspruchs 1, durch eine Signalisierungssteuerung mit den Merkmalen des Patentanspruchsk 15 und durch ein paketorientiertes Kommunikationsnetz mit den Merkmalen des Patentanspruchs 16.

Zum Steuern einer Verbindung, insbesondere einer Echtzeit- oder Quasi-Echtzeitverbindung, in einem paketorientierten Kommunikationsnetz veranlasst eine Signalisierungssteuerung des Kommunikationsnetzes einen ersten von mehreren über mindestens einen Nutzdatenkanal, insbesondere logischen Nutzdatenkanal, verbundenen Kommunikationsendpunkten durch Übermitteln einer ersten Signalisierungsmeldung zum Schließen des mindestens einen Nutzdatenkanals.

Die Signalisierungssteuerung kann vorzugsweise durch einen sog. Gatekeeper gemäß der ITU-T Empfehlung H.323 oder alternativ durch einen sog. SIP-Server gemäß dem IETF-Standard SIP (SIP: Session Initiation Protocol) realisiert sein. Ein jeweiliger Kommunikationsendpunkt kann beispielsweise ein Kommunikationsendgerät, ein sog. Gateway zwischen dem paketorientierten Kommunikationsnetz und einem leitungsorientierten Kommunikationsnetz, ein Personalcomputer, eine Kommunikationsanwendung oder ein Kommunikationsclient sein. Durch die Signalisierungssteuerung wird ferner eine Bestätigungsanforderungsmeldung zu einem zweiten der Kommunikationsendpunkte übermittelt, wodurch dieser dazu veranlasst wird, bei erfolgreicher Schließung des mindestens einen Nutzdatenkanals eine Bestätigungsmeldung zur Signalisierungssteuerung zu übermitteln. Wird die Bestätigungsmeldung durch die Signalisierungssteuerung empfangen, veranlasst diese einen Kommunikationsendpunkt, der entweder einer der oben genannten Kommunikationsendpunkte oder ein weiterer Kommunikationsendpunkt sein kann, durch Übermitteln einer zweiten Signalisierungsmeldung zum Öffnen mindestens eines neuen Nutzdatenkanals.

Durch das erfindungsgemäße Verfahren kann auf einfache Weise gewährleistet werden, dass der mindestens eine zu schließende Nutzdatenkanal erfolgreich geschlossen ist, bevor ein neuer Nutzdatenkanal geöffnet wird. Hierbei wird ausgenutzt, dass ein Kommunikationsendpunkt in einem paketorientierten Kommunikationsnetz von ihm ausgehende Nutzdatenkanäle im Wesentlichen selbstständig verwaltet und somit eine erfolgreiche Schließung eines Nutzdatenkanals unmittelbar erkennen kann. Ein erfindungsgemäßes Anfordern einer Kanalschließungsbestätigung bei einem Kommunikationsendpunkt lässt sich daher mit geringem Aufwand implementieren. Insbesondere ist ein nur geringfügig erhöhter Signalisierungsaufwand erforderlich und zwar nur dann, wenn tatsächlich ein Nutzdatenkanal zu schließen und ein neuer Nutzdatenkanal zu öffnen ist. Damit kann eine Verwaltung und Speicherung der Nutzkanalbelegung aller bestehenden Verbindungen durch die Signalisierungssteuerung entfallen. Auf diese Weise lässt sich gegenüber dem bisherigen Stand der Technik eine erhebliche Einsparung an Speicherplatz und Verarbeitungsaufwand und damit eine reduzierte Fehleranfälligkeit und eine bessere Skalierbarkeit erzielen.

Vorteilhafte Ausführungsformen und Weiterbildungen sind in den abhängigen Ansprüchen angegeben.

Nach einer ersten Ausführungsform der Erfindung kann die Übermittlung der Bestätigungsanforderungsmeldung zum zweiten Kommunikationsendpunkt im Rahmen der durch die erste Signalisierungsmeldung veranlassten Nutzdatenkanalschließung erfolgen, wodurch der zweite Kommunikationsendpunkt dazu veranlasst wird, genau diese Nutzdatenkanalschließung im Erfolgsfall zu bestätigen. In diesem Fall wird durch die Bestätigungsmeldung nur ein einzelner Schließungsvorgang, bei dem mindestens ein Nutzdatenkanal geschlossen wird, bestätigt.

Gemäß einer zweiten Ausführungsform kann die Übermittlung der Bestätigungsanforderungsmeldung zum zweiten Kommunikationsendpunkt im Zuge eines Aufbaus der Verbindung erfolgen, wodurch der zweite Kommunikationsendpunkt für die Dauer der Verbindung dazu veranlasst wird bei einer erfolgreichen Schließung eines Nutzdatenkanals eine Bestätigungsmeldung zur Signalisierungssteuerung zu übermitteln. In diesem Fall ist eine jeweilige estätigungsanforderungsmeldung nur einmal pro Verbindung zu übermitteln, wodurch der erforderliche Signalisierungsaufwand gegenüber der ersten Ausführungsform verringert wird.

Nach einer dritten Ausführungsform der Erfindung kann die Übermittlung der Bestätigungsanforderungsmeldung zum zweiten Kommunikationsendpunkt im Zuge einer Registrierung des zweiten Kommunikationsendpunkts bei der Signalisierungssteuerung erfolgen, wodurch der zweite Kommunikationsendpunkt für die Dauer seiner Registrierung dazu veranlasst wird, bei einer erfolgreichen Schließung eines Nutzdatenkanals eine Bestätigungsmeldung zur Signalisierungssteuerung zu übermitteln. In diesem Fall ist pro Registrierung nur eine Bestätigungsanforderungsmeldung zu übermitteln, wodurch der Signalisierungsaufwand gegenüber der ersten Ausführungsform verringert wird.

Nach einer vorteilhaften Weiterbildung der Erfindung kann die Signalisierungssteuerung, falls die Bestätigungsmeldung nicht in einem vorgegebenen Zeitintervall eintrifft, einen im Rahmen der Verbindung übermittelten Signalisierungsverkehr analysieren, um eine erfolgreiche Schließung des mindestens einen Nutzdatenkanals zu erkennen. Nach Erkennen einer erfolgreichen Schließung kann die Signalisierungssteuerung das Öffnen des mindestens einen neuen Nutzdatenkanals veranlassen. Die Signalisierungssteuerung verhält sich damit rückwärtskompatibel, insofern auch Kommunikationsendpunkte gemäß dem bisherigen Stand der Technik angesteuert werden können, die nicht für das erfindungsgemäße Verfahren ausgelegt sind.

Weiterhin kann als Bestätigungsanforderungsmeldung eine generische, um eine spezifisches Bestätigungsanforderungs-Informationselement ergänzte Meldung und/oder als Bestätigungsmeldung eine generische, um ein spezifisches Bestätigungsinformationselement ergänzte Meldung übertragen werden. Eine derartige generische Meldung kann hierbei jeweils um ein spezifisches Datenfeld erweitert werden, oder es kann ein vorhandenes generisches Feld einer jeweiligen Meldung, z.B. im Rahmen eines sog. GEF-Merkmals (GEF: Generic Extensibility Feature) gemäß den ITU-T-Empfehlungen der Serie H.460.x, mit einer entsprechenden Bedeutung belegt werden.

Weiterhin kann eine Kanalschließungsmeldung, z.B. eine sog. CLC-Meldung (CLC: Close Logical Channel), zum Schließen des mindestens einen Nutzdatenkanals vom ersten Kommunikationsendpunkt zu einem mit diesem über den mindestens einen Nutzdatenkanal verbundenen Kommunikationsendpunkt über die Signalisierungssteuerung übermittelt werden.

Vorzugsweise kann das Kommunikationsnetz gemäß der ITU-T-Empfehlung H.323 realisiert sein. In diesem Fall kann weiterhin als erste Signalisierungsmeldung eine sog. Terminal-Capability-Set-Meldung gemäß der ITU-T-Empfehlung H.245 mit leerer Fähigkeitsmenge übermittelt werden. Durch Empfang einer solchen Terminal-Capability-Set-Meldung mit leerer Fähigkeitsmenge wird ein Kommunikationsendpunkt zur Schließung seiner Nutzdaten-Sendekanäle veranlasst.

Ferner kann die Bestätigungsanforderungsmeldung und/oder die Bestätigungsmeldung jeweils als sog. RAS-Meldung (RAS: Registration, Admission and Status) gemäß der ITU-T-Empfehlung H.225.0 ausgestaltet sein. Als RAS-Meldungen können beispielsweise IRQ-Meldungen (IRQ: Information Request), IRR-Meldungen (IRR: Information Request Response), ACF-Meldungen (ACF: Admission Confirm) und/oder RCF-Meldungen (RCF: Registration Confirm) verwendet werden. Bei Verwendung einer ACF- oder RCF-Meldung als Bestätigungsanforderungsmeldung kann sich eine Bestätigungsanforderung auf die Dauer einer Verbindung oder auf die Dauer einer Registrierung beziehen. Nach einer weiteren Ausführungsform der Erfindung kann das Kommunikationsnetz gemäß dem IETF-Standard SIP (Session Initiation Protocol) realisiert sein.

Nach einer vorteilhaften Weiterbildung der Erfindung kann durch die Bestätigungsanforderungsmeldung spezifiziert werden, ob die erfolgreiche Schließung eines Nutzerdaten-Ssendekanals und/oder ob die erfolgreiche Schließung eines Nutzdaten-Empfangskanals zu bestätigen ist. Analog dazu kann durch die Bestätigungsmeldung spezifiziert werden, ob ein erfolgreich geschlossener Nutzdatenkanal ein Nutzdaten-Ssendekanal oder ein Nutzdaten-Empfangskanal ist.

Ein Ausführungsbeispiel der Erfindung wird nachfolgend anhand der Zeichnung näher erläutert.

Dabei zeigen jeweils in schematischer Darstellung:
Figur 1 ein paketorientiertes Kommunikationssystem mit über logische Nutzdatenkanäle gekoppelten Endgeräten in verschiedenen Netzwerkzonen und
Figuren 2 und 3 jeweils ein Ablaufdiagramm zur Veranschaulichung des Prinzips des erfindungsgemäßen Signalisierungsablaufs beim Schließen und Öffnen eines Nutzdatenkanals.

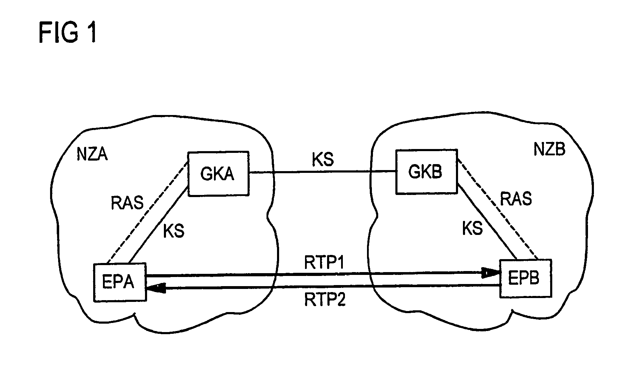

In Figur 1 ist ein verschiedene Netzwerkzonen NZA und NZB umfassendes, paketorientiertes Kommunikationssystem schematisch dargestellt. Die Netzwerkzonen NZA und NZB können sowohl verschiedene paketorientierte Kommunikationsnetze als auch verschiedene Teilnetze desselben oder verschiedener Kommunikationsnetze sein. Im vorliegenden Ausführungsbeispiel sei angenommen, dass die Netzwerkzonen NZA und NZB als internetprotokollbasierte Kommunikationsnetze gemäß der ITU-T-Empfehlung H.323 ausgestaltet sind. Während die Netzwerkzone NZA ein Endgerät EPA als Kommunikations- bzw. Verbindungsendpunkt sowie eine Signalisierungssteuerung GKA umfasst, weist die Netzwerkzone NZB ein Endgerät EPB als Kommunikations- bzw. Verbindungsendpunkt sowie eine Signalisierungssteuerung GKB auf.

Zwischen den Endgeräten EPA und EPB sind im Rahmen einer Echtzeitverbindung logische Nutzdatenkanäle RTP1 und RTP2 zur Echtzeitübertragung von Nutzdaten, z.B. in Form von Sprach-, Video- oder Multimediadatenströmen, gemäß dem sog. RTP-Protokoll (Real Time Protocol) geöffnet. Die Nutzdatenkanäle RTP1, RTP2 verlaufen direkt zwischen den Endgeräten EPA und EPB. Der Nutzdatenkanal RTP1 dient dabei zur Nutzdatenübertragung vom Endgerät EPA zum Endgerät EPB und der Nutzdatenkanal RTP2 zur Nutzdatenübertragung vom Endgerät EPB zum Endgerät EPA. Aus Sicht des Endgerätes EPA ist der Nutzdatenkanal RTP1 also ein Nutzdaten-Sendekanal und der Nutzdatenkanal RTP2 ein Nutzdaten-Empfangskanal.

Die Signalisierungssteuerungen GKA und GKB, die z.B. als Gatekeeper gemäß H.323-Empfehlung realisiert sein können, sind jeweils für eine Steuerung der Rufsignalisierung auf Signalisierungsebene in ihrer jeweiligen Netzwerkzone NZA bzw. NZB zuständig. Zu diesem Zweck erfolgt jeweils eine Kanalsteuersignalisierung KS zwischen der Signalisierungssteuerung GKA und dem Endgerät EPA, zwischen der Signalisierungssteuerung GKB und dem Endgerät EPB sowie zwischen den Signalisierungssteuerungen GKA und GKB untereinander. Insbesondere wird eine Benutzersignalisierung zwischen den Endgeräten EPA und EPB im Rahmen der Kanalsteuersignalisierung KS über die Signalisierungssteuerungen GKA und GKB geführt. Durch die Kanalsteuersignalisierung KS werden die Nutzdatenkanäle RTP1, und RTP2 gemäß der ITU-T-Empfehlung H.245 gesteuert.

Die Signalisierungssteuerungen GKA und GKB sind selbst nicht direkt an der Übertragung der Nutzdaten beteiligt, da diese direkt zwischen den Endgeräten EPA und EPB übertragen werden. Eine solche Art der Nutzdatenübertragung wird häufig auch als Peer-to-Peer-Übertragung bezeichnet. Eine aufwendige Nutzdatenkanalverwaltung in den Signalisierungssteuerungen GKA und GKB kann somit entfallen.

Zwischen der Signalisierungssteuerung GKA und dem Endgerät EPA sowie zwischen der Signalisierungssteuerung GKB und dem Endgerät EPB erfolgt weiterhin eine netzwerkzoneninterne sog. RAS-Signalisierung RAS (RAS: Registration, Admission and Staatus) gemäß der ITU-T-Empfehlung H.225.0. Im Rahmen der RAS-Signalisierung RAS, die in Figur 1 durch eine strichliierte Linie angedeutet ist, werden RAS-Meldungen zwischen dem Endgerät EPA bzw. EPB und der für dessen Netzwerkzone NZA bzw. NZB zuständigen Signalisierungssteuerung GKA bzw. GKB ausgetauscht. Es ist dagegen nicht vorgesehen, RAS Meldungen zwischen den Signalisierungssteuerungen GKA, GKB unterschiedlicher Netzwerkzonen NZA und NZB zu übermitteln.

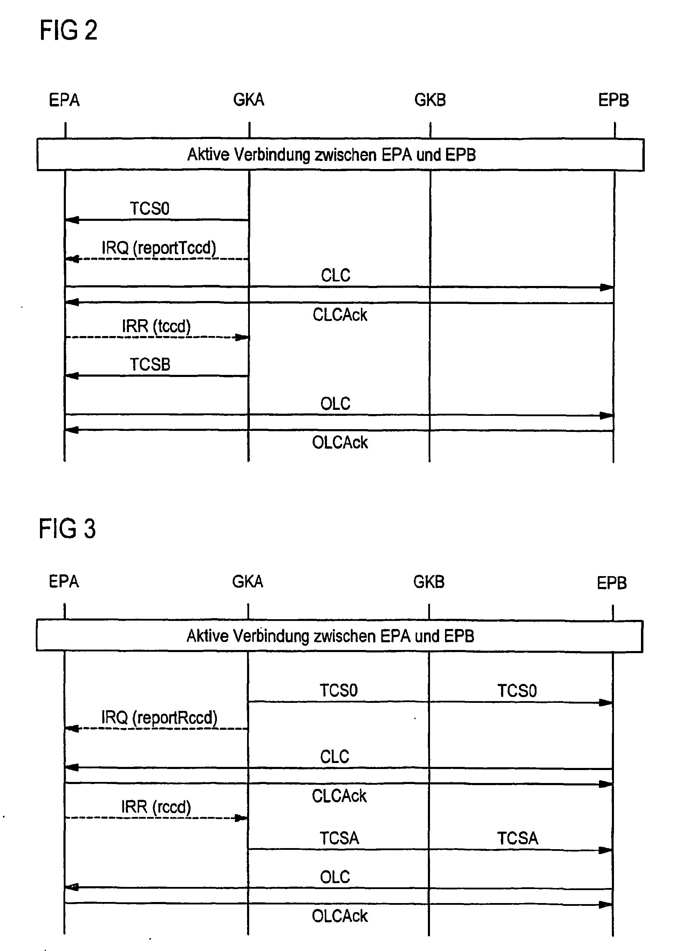

Die Figuren 2 und 3 zeigen jeweils ein Ablaufdiagramm zur Veranschaulichung des Prinzips des erfindungsgemäßen Signalisierungsablaufs beim Schließen und Öffnen eines Nutzdatenkanals. Beide Figuren 2 und 3 beziehen sich jeweils auf eine Ausgangssituation, bei der eine aktive Verbindung mit geöffneten Nutzdatenkanälen RTP1 und RTP2 zwischen den Endgeräten EPA und EPB besteht. Durch das Schließen und nachfolgende Öffnen von Nutzdatenkanälen können auf einfache Weise Medienströme, z.B. im Rahmen einer Konferenzschaltung, umgeleitet werden.

Figur 2 veranschaulicht eine erste Ausgestaltung des Prinzips des erfindungsgemäßen Verfahrens, bei der die Signalisierungssteuerung GKA das in deren Netzwerkzone NZA befindliche Endgerät EPA, zum Schließen von dessen Nutzdaten-Sendekanal RTP1 veranlasst. Zu diesem Zweck übermittelt die Signalisierungssteuerung GKA an das Endgerät EPA als erste Signalisierungsmeldung im Rahmen der Kanalsteuersignalisierung KS eine sog. Terminal-Capability-Set-Meldung TCSO gemäß der ITU-T-Empfehlung H.245 mit leerer Fähigkeitsmenge. Durch die Terminal-Capability-Set-Meldung TCSO mit leerer Fähigkeitsmenge wird das Endgerät EPA indirekt zur Schließung aller seiner Nutzdaten-Sendekanäle, hier nur RTP1, im Rahmen der bestehenden Verbindung veranlasst. Anschließend überträgt die Signalisierungssteuerung GKA eine sog. IRQ-Meldung (IRQ: Information Request) im Rahmen der RAS-Signalisierung RAS. Eine IRQ-Meldung dient gemäß der ITU-T-Empfehlung H.225.0 allgemein zum Anfordern von Informationen.

Die IRQ-Meldung IRQ enthält ein neues Informationselement reportTccd (report transmit channels closed), durch das das Endgerät EPA dazu veranlasst wird, eine erfolgreiche Schließung des Nutzdatenkanals RTP1 zu bestätigen. Die IRQ-Meldung IRQ wird somit als Bestätigungsanforderungsmeldung genutzt.

Zum Schließen des Nutzdatenkanals RTP1 sendet das Endgerät EPA im Rahmen der Kanalsteuersignalisierung KS eine Kanalschließungsmeldung CLC (Close Locigal Channel) gemäß der ITU-T-Empfehlung H.245 transparent über die Signalisierungssteuerungen GKA und GKB zum Endgerät EPB. Das Endgerät EPB bestätigt daraufhin eine erfolgreiche Schließung des Nutzdatenkanals RTP1 durch eine Kanalschließungsbestätigungsmeldung CLCAck, die transparent über die Signalisierungssteuerungen GKB und GKA zum Endgerät EPA übermittelt wird. Falls mehrere Nutzdatenkanäle zu schließen sind, sind die kanalspezifischen Meldungen CLC und CLCAck jeweils für jeden zu schließenden Nutzdatenkanal zu übermitteln.

Durch den Empfang der Kanalschließungsbestätigungsmeldung CLCAck erkennt das Endgerät EPA - anders als die Signalisierungssteuerungen GKA und GKB - unmittelbar die erfolgreiche Schließung des Nutzdatenkanals RTP1. Infolgedessen sendet das Endgerät EPA - veranlasst durch die IRQ-Meldung IRQ - im Rahmen der RAS-Signalisierung RAS eine sog. IRR-Meldung (IRR: Information Request Response) als Bestätigungsmeldung zur Signalisierungssteuerung GKA. Eine derartige IRR-Meldung dient gemäß der ITU-T-Empfehlung H.225.0 allgemein zum Beantworten einer vorher empfangenen IRQ-Meldung. Zur Durchführung des erfindungsgemäßen Verfahrens enthält die IRR-Meldung IRR ein neues Informationselement tccd (transmit channels closed) durch das die erfolgreiche Schließung des Nutzdatenkanals RTP1 bestätigt wird.

Infolge des Empfangs der IRR-Meldung IRR mit dem Informationselement tccd erkennt die Signalisierungssteuerung GKA, dass der Nutzdatenkanal RTP1 erfolgreich geschlossen wurde. Infolgedessen übermittelt die Signalisierungssteuerung GKA als zweite Signalisierungsmeldung im Rahmen der Kanalsteuersignalisierung KS eine Terminal-Capability-Set-Meldung TCSB gemäß der ITU-T-Empfehlung H.245 mit nichtleerer Fähigkeitsmenge zum Endgerät EPA. Durch die Terminal-Capability-Set-Meldung TCSB mit nichtleerer Fähigkeitsmenge wird das Endgerät EPA zum Öffnen eines oder mehrerer neuer Nutzdaten-Sendekanäle veranlasst. Ein Schließen und Öffnen von Nutzdaten-Sendekanälen durch Terminal-Capability-Set-Meldungen wird auch als Pause-and-Rerouting-Prozedur bezeichnet.

Zum Öffnen eines neuen Nutzdaten-Sendekanals übermittelt das Endgerät EPA im Rahmen der Kanalsteuersignalisierung KS eine Kanalöffnungsmeldung OLC (Open Logical Channel) über die Signalisierungssteuerungen GKA und GKB zum Endgerät EPB oder zu einem anderen Endgerät. Ein Öffnen des neuen Nutzdatenkanals wird durch eine Kanalöffnungsbestätigungsmeldung OLCAck bestätigt.

Figur 3 veranschaulicht eine zweite Ausgestaltung des Prinzips des erfindungsgemäßen Verfahrens, bei der die Signalisierungssteuerung GKA das in der anderen Netzwerkzone NZB befindliche Endgerät EPB zum Schließen von dessen Nutzdaten-Sendekanal RTP2 veranlasst. Zu diesem Zweck sendet die Signalisierungssteuerung GKA als erste Signalisierungsmeldung im Rahmen der Kanalsteuersignalisierung KS eine Terminal-Capability-Set-Meldung TCSO mit leerer Fähigkeitsmenge über die Signalisierungssteuerung GKB zum Endgerät EPB. Das Endgerät EPB wird dadurch indirekt zur Schließung aller seiner Nutzdaten-Sendekanäle, hier nur RTP2, im Rahmen der bestehenden Verbindung veranlasst. Anders als bei der oben beschriebenen, ersten Ausgestaltung der Erfindung kann die Signalisierungssteuerung GKA keine RAS-Meldung als Bestätigungsanforderungsmeldung zu dem zum Schließen seiner Nutzdaten-Sendekanäle veranlassten Endgerät EPB übermitteln, da im Allgemeinen keine Übertragung von RAS-Meldungen zwischen unterschiedlichen Netzwerkzonen vorgesehen ist.

Zur Umgehung dieses Problems sendet die Signalisierungssteuerung GKA im Rahmen der RAS-Signalisierung RAS eine IRQ-Meldung IRQ als Bestätigungsanforderungsmeldung zum Endgerät EPA. Diese IRQ-Meldung IRQ enthält dabei ein neues Informationselement reportRccd (report receive channels closed), durch das das Endgerät EPA dazu veranlasst wird, die erfolgreiche Schließung seines Nutzdaten-Empfangskanals RTP2 zu bestätigen.

Das Endgerät EPB sendet infolge des Empfangs der Terminal-Capability-Set-Meldung TCSO mit leerer Fähigkeitsmenge eine Kanalschließungsmeldung CLC im Rahmen der Kanalsteuersignalisierung KS zum Endgerät EPA. Das Endgerät EPA schließt daraufhin seinen Nutzdaten-Empfangskanal RTP2 und bestätigt dessen erfolgreiche Schließung durch Übermitteln einer Kanalschließungsbestätigungsmeldung CLCAck zum Endgerät EPB. Darüber hinaus bestätigt das Endgerät EPA - veranlasst durch den vorhergehenden Empfang der IRQ-Meldung IRQ mit dem Informationselement reportRccd - die erfolgreiche Schließung seines Nutzdaten-Empfangskanals RTP2 durch Übermitteln einer IRR-Meldung IRR. Die IRR-Meldung IRR enthält hierbei erfindungsgemäß ein neues Informationselement rccd (receive channels closed). Durch das Informationselement rccd wird der Signalisierungssteuerung GKA die erfolgreiche Schließung des Nutzdatenkanals RTP2 bestätigt.

Nach dieser Bestätigung kann die Signalisierungssteuerung GKA durch Übermitteln einer Terminal-Capability-Set-Meldung TCSA mit nichtleerer Fähigkeitsmenge zum Endgerät EPB oder zu einem anderen Endgerät ein Öffnen eines oder mehrerer neuer Nutzdaten-Sendekanäle veranlassen. Zum Öffnen eines neuen Nutzdaten-Sendekanals übermittelt das Endgerät EPB, wie schon analog in Zusammenhang mit Figur 2 beschrieben, im Rahmen der Kanalsteuersignalisierung KS eine Kanalöffnungsmeldung OLC zum Endgerät EPA, das diese durch eine Kanalöffnungsbestätigungsmeldung OLCAck bestätigt.

Die durch die Figuren 2 und 3 veranschaulichten Signalisierungsabläufe können vorteilhaft miteinander kombiniert werden, um Nutzdatenkanäle RTP1, RTP2 bei beiden Endgeräten EPA und EPB in paralleler Weise zu schließen und zu öffnen. Zu diesem Zweck kann die Signalisierungssteuerung GKA eine Terminal-Capability-Set-Meldung TCSO mit leerer Fähigkeitsmenge parallel zu beiden Endgeräten EPA und EPB übermitteln. Entsprechend kann die Signalisierungssteuerung GKA zum Endgerät EPA eine IRQ-Meldung übertragen, die sowohl das Informationselement reportTccd als auch das Informationselement reportRccd enthält. Das Endgerät EPA wird dadurch dazu veranlasst, eine erfolgreiche Schließung sowohl seines Nutzdaten-Sendekanals RTP1 als auch seines Nutzdaten-Empfangskanals RTP2 zu bestätigen. Die Bestätigung kann gegebenenfalls durch eine die Informationselemente Tccd und Rccd enthaltende IRR-Meldung erfolgen.

Alternativ dazu kann eine Signalisierungssteuerung, hier GKA, einen Kommunikationsendpunkt, hier EPB, der sich in einer fremden Netzwerkzone, hier NZB, befindet, mittels Meldungen und Informationselementen der ITU-T-Empfehlungen H.225.0 Annex G oder H.501 oder über entsprechende Protokolle ansteuern.

Das erfindungsgemäße Verfahren erlaubt einen expliziten Informationsaustausch zwischen Kommunikationsendpunkt und Signalisierungssteuerung über eine erfolgreiche Schließung von Nutzdatenkanälen. Das Verfahren basiert auf bestehenden Funktionalitäten und bildet diese gezielt weiter. Aufgrund einer Verwendung bestehender oder standardisierter Meldungen ist das Verfahren insbesondere rückwärtskompatibel einsetzbar, so dass im Wesentlichen keine Interoperabilitätsprobleme auftreten. Der durch die zusätzlichen IRQ- und IRR-Meldungen bedingte Signalisierungsmehraufwand kann als vernachlässigbar betrachtet werden, zumal dieser Mehraufwand nur dann auftritt, wenn Nutzdatenkanäle auf die beschriebene Weise geschlossen und wieder geöffnet werden.

Das erfindungsgemäße Verfahren, das im Ausführungsbeispiel im Zusammenhang mit einem H.323-Kommunikationssystem beschrieben ist, kann sinngemäß auch in anderen paketorientierten Kommunikationssystemen, wie z.B. in sog. SIP-Kommunikations-systemen (SIP: Session Initiation Protocol) im Rahmen der sog. Re-invite-Methode, eingesetzt werden.

## Patentansprüche

1. Verfahren zum Steuern einer Verbindung in einem paketorientierten Kommunikationsnetz (NZA, NZB), bei dem eine Signalisierungssteuerung (GKA) des Kommunikationsnetzes
a) einen ersten von mehreren über mindestens einen Nutzdatenkanal (RTP1, RTP2) verbundenen Kommunikationsendpunkten (EPA, EPB) durch Übermitteln einer ersten Signalisierungsmeldung (TCSO) zum Schließen des mindestens einen Nutzdatenkanals (RTP1, RTP2) veranlasst,
b) zu einem vom ersten Kommunikationsendpunkt verschiedenen, zweiten (EPA) der Kommunikationsendpunkte eine Bestätigungsanforderungsmeldung (IRQ) übermittelt, wodurch der zweite Kommunikationsendpunkt (EPA) dazu veranlasst wird, bei erfolgreicher Schließung des mindestens einen Nutzdatendatenkanals (RTP1, RTP2) eine Bestätigungsmeldung (IRR) zur Signalisierungsteuerung (GKA) zu übermitteln, und
c) infolge eines Empfangs der Bestätigungsmeldung (IRR) einen Kommunikationsendpunkt (EPA, EPB) durch Übermitteln einer zweiten Signalisierungsmeldung (TCSB, TCSA) zum Öffnen mindestens eines neuen Nutzdatenkanals veranlasst.

2. Verfahren nach Anspruch 1,
**dadurch gekennzeichnet,**
**dass** die Übermittlung der Bestätigungsanforderungsmeldung (IRQ) zum zweiten Kommunikationsendpunkt (EPA) im Rahmen der durch die erste Signalisierungsmeldung (TCSO) veranlassten Nutzdatenkanalschließung erfolgt, wodurch der zweite Kommunikationsendpunkt (EPA) dazu veranlasst wird, genau diese Nutzdatenkanalschließung im Erfolgsfall zu bestätigen.

3. Verfahren nach Anspruch 1,
**dadurch gekennzeichnet,**
**dass** die Übermittlung der Bestätigungsanforderungsmeldung (IRQ) zum zweiten Kommunikationsendpunkt (EPA) im Zuge eines Aufbaus der Verbindung erfolgt, wodurch der zweite Kommunikationsendpunkt (EPA) für die Dauer der Verbindung dazu veranlasst wird, bei einer erfolgreichen Schließung eines Nutzdatendatenkanals (RTP1, RTP2) eine Bestätigungsmeldung (IRR) zur Signalisierungsteuerung (GKA) zu übermitteln.

4. Verfahren nach Anspruch 1,
**dadurch gekennzeichnet,**
**dass** die Übermittlung der Bestätigungsanforderungsmeldung (IRQ) zum zweiten Kommunikationsendpunkt (EPA) im Zuge einer Registrierung des zweiten Kommunikationsendpunkts (EPA) bei der Signalisierungssteuerung (GKA) erfolgt, wodurch der zweite Kommunikationsendpunkt (EPA) für die Dauer seiner Registrierung dazu veranlasst wird, bei einer erfolgreichen Schließung eines Nutzdatendatenkanals (RTP1, RTP2) eine Bestätigungsmeldung (IRR) zur Signalisierungsteuerung (GKA) zu übermitteln.

5. Verfahren nach einem der vorhergehenden Ansprüche,
**dadurch gekennzeichnet,**
**dass** falls die Bestätigungsmeldung (IRR) nicht in einem vorgegebenen Zeitintervall bei der Signalisierungssteuerung (GKA) eintrifft, die Signalisierungssteuerung (GKA) einen im Rahmen der Verbindung übermittelten Signalisierungsverkehr analysiert, um eine erfolgreiche Schließung des mindestens einen Nutzdatenkanals (RTP1, RTP2) zu erkennen.

6. Verfahren nach einem der vorhergehenden Ansprüche,
**dadurch gekennzeichnet,**
**dass** als Bestätigungsanforderungsmeldung (IRQ) eine generische, um ein spezifisches Bestätigungsanforderungs-Informationselement (reportTccd, reportRccd) ergänzte Meldung übertragen wird.

7. Verfahren nach einem der vorhergehenden Ansprüche,
**dadurch gekennzeichnet,**
**dass** als Bestätigungsmeldung (IRR) eine generische, um ein spezifisches Bestätigungs-Informationselement (tccd, rccd) ergänzte Meldung übertragen wird.

8. Verfahren nach einem der vorhergehenden Ansprüche,
**dadurch gekennzeichnet,**
**dass** eine Kanalschließungsmeldung (CLC) zum Schließen des mindestens einen Nutzdatenkanals (RTP1, RTP2) vom ersten Kommunikationsendpunkt (EPA, EPB) zu einem mit diesem über den mindestens einen Nutzdatenkanal (RTP1, RTP2) verbundenen Kommunikationsendpunkt (EPB, EPA) über die Signalisierungssteuerung (GKA) übermittelt wird.

9. Verfahren nach einem der vorhergehenden Ansprüche,
**dadurch gekennzeichnet,**
**dass** das Kommunikationsnetz (NZA, NZB) gemäß der ITU-T-Empfehlung H.323 realisiert ist.

10. Verfahren nach Anspruch 9,
**dadurch gekennzeichnet,**
**dass** als erste Signalisierungsmeldung (TCSO) eine sog. TerminalCapability-Set-Meldung gemäß der ITU-T-Empfehlung H.245 mit leerer Fähigkeitsmenge übermittelt wird.

11. Verfahren nach Anspruch 9 oder 10,
**dadurch gekennzeichnet,**
**dass** die Bestätigungsanforderungsmeldung (IRQ) und/oder die Bestätigungsmeldung (IRR) jeweils als sog. RAS-Meldung (RAS: Registration, Admission and Status) gemäß der ITU-T-Empfehlung H.225.0 ausgestaltet ist.

12. Verfahren nach einem der Ansprüche 1 bis 8,
**dadurch gekennzeichnet,**
**dass** das Kommunikationsnetz gemäß dem IETF-Standard SIP (Session Initiation Protocol) realisiert ist.

13. Verfahren nach einem der vorhergehenden Ansprüche,
**dadurch gekennzeichnet,**
**dass** durch die Bestätigungsanforderungsmeldung (IRQ) spezifiziert wird, ob die erfolgreiche Schließung eines Nutzdaten-Sendekanals und/oder ob die erfolgreiche Schließung eines Nutzdaten-Empfangskanals zu bestätigen ist.

14. Verfahren nach einem der vorhergehenden Ansprüche,
**dadurch gekennzeichnet,**
**dass** durch die Bestätigungsmeldung (IRR) spezifiziert wird, ob ein erfolgreich geschlossener Nutzdatenkanal (RTP1, RTP2) ein Nutzdaten-Sendekanal oder ein Nutzdaten-Empfangskanal ist.

15. Signalisierungssteuerung (GKA) für ein paketorientiertes Kommunikationsnetz zur Durchführung des Verfahrens nach einem der vorhergehenden Ansprüche.

16. Paketorientiertes Kommunikationsnetz (NZA, NZB) mit einer Signalisierungssteuerung (GKA) nach dem Anspruch 15.

## Claims

1. Method for controlling a connection in a packet-oriented communication network (NZA, NZB), according to which a signalling control device (GKA) of the communication network
a) prompts a first of several communication end points (EPA, EPB), which are connected via at least one user data channel (RTP1, RTP2), to close the at least one user data channel (RTP1, RTP2) by transmitting a first signalling message (TCS0),
b) transmits a confirmation request message (IRQ) to a second of the communication end points (EPA) different from the first communication end point, as a result of which the second communication end point (EPA) is prompted to transmit a confirmation message (IRR) to the signalling control device (GKA) if the at least one user data channel (RTP1, RTP2) has been successfully closed, and
c) following receipt of the confirmation message (IRR), prompts a communication end point (EPA, EPB) to open at least one new user data channel by transmitting a second signalling message (TCSB, TCSA).

2. Method according to claim 1,
**characterised in**
**that** the confirmation request message (IRQ) is transmitted to the second communication end point (EPA) during the closure of the user data channel prompted by the first signalling message (TCS0), as a result of which the second communication end point (EPA) is prompted to confirm precisely this closure of a user data channel, if successful.

3. Method according to claim 1,
**characterised in**
**that** the confirmation request message (IRQ) is transmitted to the second communication end point (EPA) after the connection is made, as a result of which the second communication end point (EPA) is prompted, for the duration of the connection, to transmit a confirmation message (IRR) to the signalling control device (GKA) when a user data channel (RTP1, RTP2) has been successfully closed.

4. Method according to claim 1,
**characterised in**
**that** the confirmation request message (IRQ) is transmitted to the second communication end point (EPA) after a registration of the second communication end point (EPA) with the signalling control device (GKA), as a result of which the second communication end point (EPA) is prompted, for the duration of its registration, to transmit a confirmation message (IRR) to the signalling control device (GKA) when a user data channel (RTP1, RTP2) has been successfully closed.

5. Method according to one of the preceding claims
**characterised in**
**that** if the confirmation message (IRR) fails to arrive at the signalling control device (GKA) within a predefined time interval, the signalling control device (GKA) analyses any signalling traffic transmitted during the connection in order to detect a successful closure of the at least one user data channel (RTP1, RTP2).

6. Method according to one of the preceding claims
**characterised in**
**that** a generic message, extended to include a specific confirmation request information element (reportTccd, reportRccd), is transmitted as the confirmation request message (IRQ).

7. Method according to one of the preceding claims
**characterised in**
**that** a generic message, extended to include a specific confirmation information element (tccd, rccd), is transmitted as the confirmation message (IRR).

8. Method according to one of the preceding claims
**characterised in**
**that** a channel closure message (CLC) to close the at least one user data channel (RTP1, RTP2) is transmitted from the first communication end point (EPA, EPB) to a communication end point (EPA, EPB) connected with this via the at least one user data channel (RTP1, RTP2) via the signalling control device (GKA).

9. Method according to one of the preceding claims
**characterised in**
**that** the communication network (NZA, NZB) is realised in accordance with ITU-T recommendation H.323.

10. Method according to claim 9,
**characterised in**
**that** what is known as a terminal capability set message in accordance with ITU-T recommendation H.245 with an empty capability set is transmitted as the first signalling message (TCS0).

11. Method according to claim 9 or 10,
**characterised in**
**that** the confirmation request message (IRQ) and/or the confirmation message (IRR) are each configured as a RAS (Registration, Admission and Status) message in accordance with ITU-T recommendation H.225.0.

12. Method according to one of claims 1 to 8,
**characterised in**
**that** the communication network is realised in accordance with the IETF standard SIP (Session Initiation Protocol).

13. Method according to one of the preceding claims,
**characterised in**
**that** the confirmation request message (IRQ) specifies whether the successful closure of a user data transmission channel and/or whether the successful closure of a user data receiving channel should be confirmed.

14. Method according to one of the preceding claims
**characterised in**
**that** the confirmation message (IRR) specifies whether a successfully closed user data channel (RTP1, RTP2) is a user data transmission channel or a user data receiving channel.

15. Signalling control device (GKA) for a packet-oriented communication network for implementing the method according to one of the preceding claims

16. Packet-oriented communication network (NZA, NZB) with a signalling control device (GKA) according to claim 15.

## Revendications

1. Procédé de commande d'une liaison dans un réseau de communication à commutation de paquets (NZA, NZB), dans lequel une commande de signalisation (GKA) du réseau de communication
a) ordonne à un premier point de terminaison de communication parmi plusieurs points terminaux de communication (EPA, EPB) reliés par au moins un canal de données utiles (RTP1, RTP2) de fermer le ou les canaux de données utiles (RTP1, RTP2) suite à la transmission d'un premier message de signalisation (TCSO),
b) transmet à un deuxième (EPA) des points de terminaison de communication, différent du premier point de terminaison de communication, un message de demande de confirmation (IRQ) par lequel le deuxième point de terminaison de communication (EPA) ordonne que, en cas de fermeture réussie du ou des canaux de données utiles (RTP1, RTP2), un message de confirmation (IRR) soit envoyé au dispositif de commande de signalisation (GKA), et
c) suite à une réception du message de confirmation (IRR), ordonne à un point de terminaison de communication (EPA, EPB) d'ouvrir au moins un nouveau canal de données utiles suite à la transmission d'un deuxième message de signalisation (TCSB, TCSA).

2. Procédé selon la revendication 1,
**caractérisé en ce**
**que** la transmission du message de demande de confirmation (IRQ) au deuxième point de terminaison de communication (EPA) est effectuée dans le cadre de la fermeture du canal de données utiles ordonnée par le premier message de signalisation (TCSO) par lequel il a été ordonné au point de terminaison de communication (EPA) de confirmer précisément cette fermeture de canal de données utiles en cas de succès.

3. Procédé selon la revendication 1,
**caractérisé en ce**
**que** la transmission du message de demande de confirmation (IRQ) au deuxième point de terminaison de communication (EPA) est effectuée au cours d'un établissement de la liaison par laquelle il est ordonné au deuxième point de terminaison de communication (EPA) pour la durée de la liaison, en cas d'une fermeture réussie d'un canal de données utiles (RTP1, RTP2), de transmettre un message de confirmation (IRR) au dispositif de commande de signalisation (GKA).

4. Procédé selon la revendication 1,
**caractérisé en ce**
**que** la transmission du message de demande de confirmation (IRQ) au deuxième point de terminaison de communication (EPA) est effectuée au cours d'un enregistrement du deuxième point de terminaison de communication (EPA) auprès du dispositif de commande de signalisation (GKA), moyennant quoi il est ordonné au deuxième point de terminaison de communication (EPA) de transmettre pendant la durée de son enregistrement, en cas de fermeture réussie d'un canal de données utiles (RTP1, RTP2), un message de confirmation (IRR) au dispositif de commande de signalisation (GKA).

5. Procédé selon l'une quelconque des revendications précédentes,
**caractérisé en ce**
**que**, si le message de confirmation (IRR) n'arrive pas au dispositif de commande de signalisation (GKA) dans un intervalle de temps prédéfini, le dispositif de commande de signalisation (GKA) analyse un trafic de signalisation transmis dans le cadre de la liaison afin de reconnaître une fermeture réussie du ou des canaux de données utiles (RTP1, RTP2).

6. Procédé selon l'une quelconque des revendications précédentes,
**caractérisé en ce**
**que** le message de demande de confirmation (IRQ) transmis est un message générique complété par un élément d'information de demande de confirmation spécifique (reportTccd, reportRccd).

7. Procédé selon l'une quelconque des revendications précédentes,
**caractérisé en ce**
**que** le message de confirmation (IRR) transmis est un message générique complété par un élément d'information de confirmation (tccd, rccd).

8. Procédé selon l'une quelconque des revendications précédentes,
**caractérisé en ce**
**qu'**un message de fermeture (CLC) destiné à fermer le ou les canaux de données utiles (RTP1, RTP2) est transmis, par le biais du dispositif de commande de signalisation (GKA), par le premier point de terminaison de communication (EPA, EPB) à un point de terminaison de communication (EPB, EPA) relié au premier par le ou les canaux de données utiles (RTP1, RTP2).

9. Procédé selon l'une quelconque des revendications précédentes,
**caractérisé en ce**
**que** le réseau de communication (NZA, NZB) est réalisé selon la recommandation UIT-T H.323.

10. Procédé selon la revendication 9,
**caractérisé en ce**
**que** le premier message de signalisation (TCSO) transmis est un message « Terminal-Capability-Set » selon la recommandation de l'UIT-T H.245 avec un montant de capacité vide.

11. Procédé selon la revendication 9 ou 10,
**caractérisé en ce**
**que** le message de demande de confirmation (IRQ) et/ou le message de confirmation (IRR) est conçu selon le message RAS (RAS : Enregistrement, Admission et Etat) défini par la recommandation IUT-T H.225.0.

12. Procédé selon quelconque des revendications 1 à 8, **caractérisé en ce**
**que** le réseau de communication est réalisé selon le protocole SIP (protocole d'ouverture de session) de IETF-Standard).

13. Procédé selon l'une quelconque des revendications précédentes,
**caractérisé en ce**
**que** le message de demande de confirmation (IRQ) spécifie si la fermeture réussie d'un canal d'émission de données utiles et/ou la fermeture réussie d'un canal de réception de données utiles doit être confirmée.

14. Procédé selon l'une quelconque des revendications précédentes,
**caractérisé en ce**
**que** le message de confirmation (IRR) spécifie si la fermeture réussie se rapporte à un canal de données utiles (RTP1, RTP2), un canal d'émission de données utiles ou canal de réception de données utiles.

15. Dispositif de commande de signalisation (GKA) pour un réseau de communication à commutation de paquets permettant d'exécuter le procédé selon l'une quelconque des revendications précédentes.

16. Réseau de communication à commutation de paquets (NZA, NZB) ayant un dispositif de commande de signalisation (GKA) selon la revendication 15.
